# FASCICULE DE BREVET EUROPEEN

(11) **EP 2 016 878 B1**
(45) Date de publication et mention de la délivrance du brevet: **11.08.2010**
(21) Numéro de dépôt: 08447035.0
(22) Date de dépôt: 22.07.2008
(51) Int. Cl.: A47J 45/06, A47J 27/08

(54) **Autocuiseur pourvu d'un organe de préhension fixe sur la cuve**
Schnellkochtopf mit einem festen Griff am Topf
Pressure cooker equipped with a fixed gripping element on the tank

(30) Priorité: 20.07.2007 FR 0705261
(43) Date de publication de la demande: 21.01.2009
(73) Titulaire: SEB S.A., 69132 Ecully Cedex (FR)
(72) Inventeur: Rhetat, Eric Jacques, 21000 Dijon (FR); Cartigny, Michel Pierre, 21310 Mirebeau sur Beze (FR)
(74) Mandataire: Martin, Didier Roland Valéry

(56) Documents cités:
- EP-A- 1 535 551
- WO-A-01/43605

## Description

La présente invention se rapporte au domaine technique général des ustensiles de cuisine du type récipients de cuisson, et en particulier au secteur des autocuiseurs, c'est à dire des marmites de cuisson sous pression destinées à assurer la cuisson sous pression de vapeur des aliments contenus en leur sein.

La présente invention concerne plus particulièrement un autocuiseur domestique comprenant :
- une cuve qui comprend elle-même une paroi,
- un couvercle destiné à être rapporté sur la cuve pour former avec cette dernière une enceinte de cuisson sensiblement étanche,
- et au moins un organe de préhension, fixé sur la cuve à l'aide d'un moyen d'attache.

Les autocuiseurs domestiques sont bien connus. Un autocuiseur de ce type est décrit dans EP 1 535 551 A. Ils se composent habituellement d'une cuve métallique destinée à accueillir les aliments et d'un couvercle, métallique lui aussi, destiné à être rapporté et verrouillé sur la cuve pour former avec cette dernière une enceinte de cuisson étanche.

Un tel autocuiseur est destiné à être soumis à l'influence d'une source de chauffe (comme par exemple une plaque de cuisson) de manière à permettre la montée en pression et en température de l'enceinte et ainsi la cuisson sous pression des aliments contenus dans cette dernière.

La cuve de ces autocuiseurs connus est habituellement pourvue d'une paire de poignées, fixées sur la paroi latérale de la cuve de manière diamétralement opposées l'une par rapport à l'autre, lesdites poignées s'étendant à partir de la paroi latérale de la cuve vers l'extérieur de cette dernière. Ces poignées permettent à l'utilisateur de manipuler non seulement la cuve seule mais également et surtout l'autocuiseur complet (formé de l'assemblage de la cuve et du couvercle), en particulier lorsque ledit autocuiseur est rempli d'aliments cuits ou à cuire, accompagnés éventuellement d'un liquide de cuisson.

La cuve métallique est généralement obtenue par des procédés de fabrication métallurgiques, tels que l'emboutissage. Les poignées sont quant à elles habituellement réalisées en un matériau thermodurcissable thermiquement isolant, afin d'éviter que l'utilisateur ne se brûle en saisissant les poignées alors que la cuve est chaude.

La différence de nature entre la cuve (obtenue par emboutissage d'un flan métallique) et la poignée (obtenue par moulage d'une matière thermodurcissable) interdit bien entendu l'obtention en une seule et même opération d'une cuve équipée de ses poignées. Il est donc nécessaire de rapporter les poignées sur la cuve et de les fixer à cette dernière.

A cette fin, il est connu de fixer sur la face extérieure de la paroi latérale de la cuve un pontet métallique, par exemple par soudure. La poignée est ensuite assemblée sur le pontet à l'aide d'une vis métallique, cette dernière traversant la poignée pour venir se visser dans le pontet de manière centripète par rapport à l'axe de symétrie général de la cuve (de l'extérieur vers l'intérieur).

Un tel autocuiseur, s'il donne généralement satisfaction, n'en présente pas moins un certain nombre d'inconvénients.

Ainsi, la mise en oeuvre d'un pontet métallique pour fixer chaque poignée sur la cuve contribue à augmenter la complexité et le coût des opérations de fabrication de l'autocuiseur, dans la mesure où elle nécessite un supplément de matière première pour réaliser le pontet (ladite matière première étant de surcroît, s'agissant d'acier, de plus en plus rare et chère) et des opérations de soudure précises nécessitant non seulement un matériel spécifique mais également une main d'oeuvre qualifiée.

De plus, la tête de la vis d'assemblage de la poignée sur le pontet est, compte-tenu du montage réalisé (vissage centripète), nécessairement accessible de l'extérieur de l'autocuiseur. Or, la vis est elle-même en contact direct avec le pontet dans lequel elle est vissée, ledit pontet étant lui-même en contact direct avec la paroi de la cuve à laquelle il est soudé, ladite cuve étant quant à elle soumise à l'influence de la source de chauffe. Par conséquent, par un effet de conduction thermique, la tête de vis peut être brûlante et constituer à ce titre une source d'accident grave par brûlure pour l'utilisateur qui viendrait à la toucher malencontreusement en voulant justement saisir les poignées.

C'est pourquoi il est nécessaire de conformer la poignée de manière à éviter que l'utilisateur ne puisse malencontreusement toucher la tête de vis en saisissant les poignées. Une telle conformation, qui est imposée par des normes de sécurité applicables dans de nombreux pays, met en jeu un surplus de matière qui vient renchérir le coût de l'autocuiseur, alors que ce dernier est un ustensile de grande consommation qui doit être accessible au plus grand nombre. Ces exigences normatives constituent en outre une contrainte de conception supplémentaire qui peut interdire de donner aux poignées une forme plus esthétique, ou du moins plus attractive ou originale, que celle de poignées connues.

Les objets assignés à l'invention visent en conséquence à porter remède aux divers inconvénients énumérés précédemment et à proposer un nouvel autocuiseur domestique dont la construction est particulièrement simple, fiable et bon marché.

Un autre objet de l'invention vise à proposer un nouvel autocuiseur domestique dont le principe général de construction est bien connu et éprouvé.

Un autre objet de l'invention vise à proposer un nouvel autocuiseur domestique de conception particulièrement robuste.

Un autre objet de l'invention vise à proposer un nouvel autocuiseur domestique offrant une excellente sécurité d'utilisation.

Les objets assignés à l'invention sont atteints à l'aide d'un autocuiseur domestique comprenant :
- une cuve qui comprend elle-même une paroi,
- un couvercle destiné à être rapporté sur la cuve pour former avec cette dernière une enceinte de cuisson sensiblement étanche,
- au moins un organe de préhension, fixé sur la cuve à l'aide d'un moyen d'attache,
caractérisé en ce que le moyen d'attache comprend au moins :
- un orifice de fixation traversant la paroi de la cuve, ledit orifice de fixation étant positionné sur la paroi de la cuve pour ne pas communiquer avec l'intérieur de l'enceinte de cuisson,
- et un élément de fixation, relié à l'organe de préhension et s'étendant à travers l'orifice de fixation.

D'autres particularités et avantages de l'invention apparaîtront et ressortiront plus en détails à la lecture de la description faite ci-après, en référence aux dessins annexés, donnés à titre d'exemple illustratif et non limitatif dans lesquels :

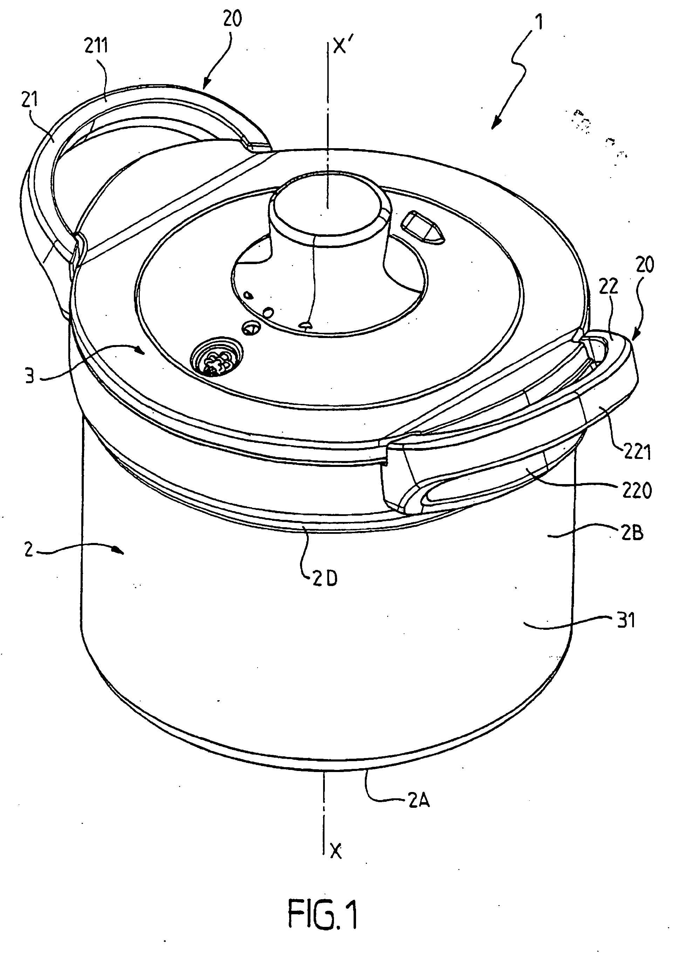

- La figure 1 illustre, selon une vue générale en perspective, un autocuiseur domestique conforme à l'invention.

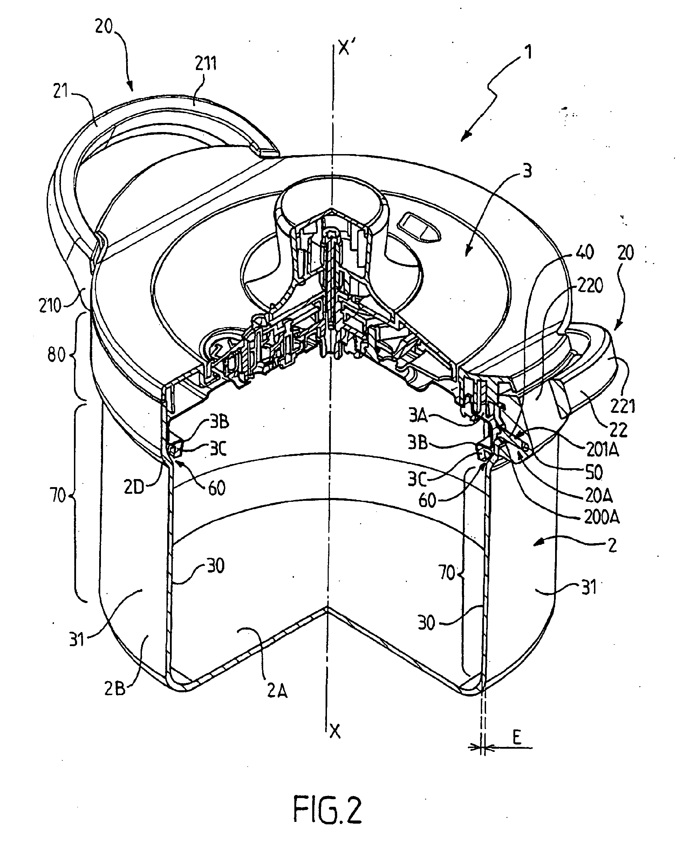

- La figure 2 illustre, selon une vue générale en perspective partiellement coupée, selon deux plans de coupe sensiblement perpendiculaires, l'autocuiseur de la figure 1.
- La figure 3 illustre, selon une vue de dessus partiellement écorchée et coupée, l'autocuiseur des figures 1 et 2 avec le couvercle verrouillé sur la cuve.
- La figure 4 illustre, selon une vue de dessus partiellement écorchée et coupée, l'autocuiseur des figures 1 à 3 avec son couvercle déverrouillé sur la cuve.

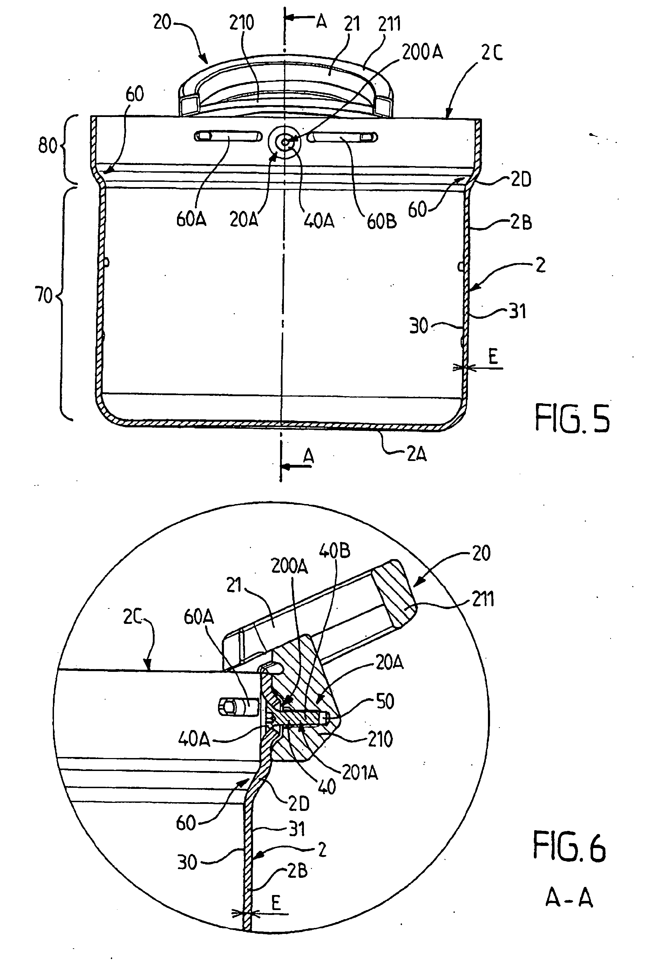

- La figure 5 illustre, selon une vue latérale en coupe, la cuve de l'autocuiseur illustré aux figures 1 à 4.
- La figure 6 illustre, selon une vue en coupe selon la ligne A-A de la figure 5, un détail agrandi de réalisation de la cuve illustrée à la figure 5.

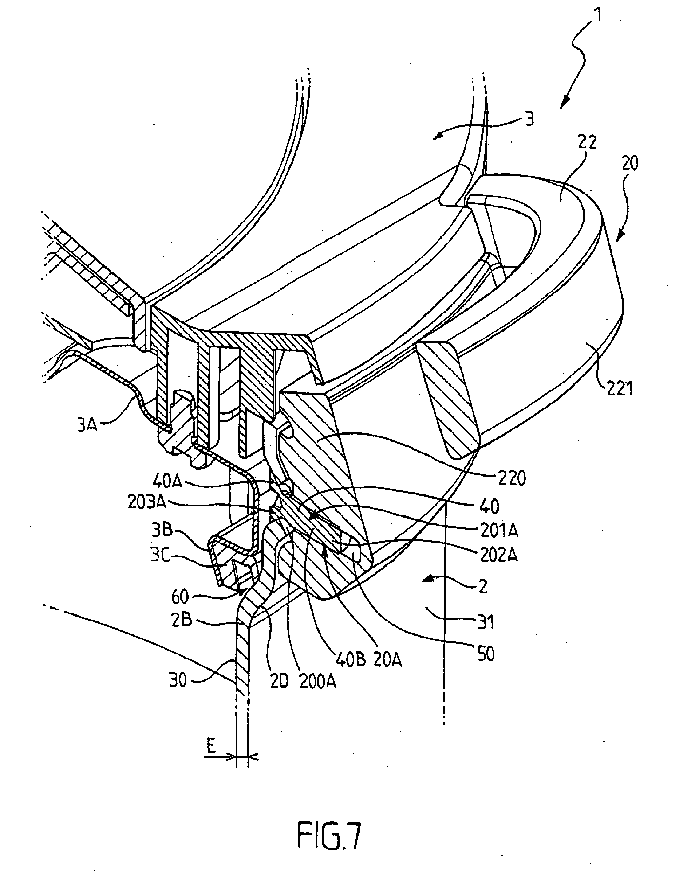

- La figure 7 illustre, selon une vue en perspective coupée, un détail de réalisation de d'autocuiseur illustré aux figures 1 à 4.

L'autocuiseur 1 conforme à l'invention est destiné à assurer la cuisson de différents aliments sous pression dans un contexte domestique. Il forme donc à ce titre un autocuiseur domestique.

L'autocuiseur 1 conforme à l'invention est donc un ustensile de cuisine présentant un caractère portatif (c'est à dire déplaçable manuellement) et indépendant.

Avantageusement, l'autocuiseur 1 conforme à l'invention constitue une marmite passive thermiquement, conçue pour monter en pression sous l'effet d'une source de chauffe qui lui est extérieure, telle qu'une plaque de cuisson.

De façon préférentielle, l'autocuiseur 1 conforme à l'invention comprend une cuve 2 formant récipient de cuisson et présentant avantageusement sensiblement une symétrie de révolution selon un axe X-X'. Par la suite, l'adjectif « *axial* » se référera à la direction de cet axe de symétrie X-X', direction qui s'apparente à la direction verticale lorsque l'appareil est en fonctionnement normal. La cuve 2 est par exemple et de manière classique fabriquée par emboutissage d'un flan en matériau métallique tel que l'aluminium ou l'acier inoxydable.

La cuve 2 comprend ainsi une paroi, laquelle paroi comprend elle-même, dans l'exemple de réalisation illustré :
- un fond 2A, qui présente par exemple une forme discoïde,
- et une paroi latérale 2B, qui s'élève à partir et à la périphérie dudit fond 2A ; ladite paroi latérale 2B présente une forme sensiblement annulaire et délimite une ouverture supérieure 2C permettant d'introduire des aliments dans la cuve 2, en vue de les y cuire ; ladite paroi latérale 2B présente également une face interne 30 située en regard de l'intérieur de la cuve 2 et une face externe 31 opposée.

L'autocuiseur 1 conforme à l'invention comprend également un couvercle 3 destiné à être rapporté sur ladite cuve 2 pour former avec cette dernière une enceinte de cuisson de préférence sensiblement étanche, c'est-à-dire suffisamment hermétique pour permettre une montée en pression en son sein.

Ainsi, l'enceinte formée par la réunion de la cuve 2 et du couvercle 3 est conçue pour permettre une augmentation significative de pression en son sein, de sorte que pendant la cuisson, la pression régnant dans l'enceinte peut être nettement supérieure à la pression atmosphérique, et par exemple excéder ladite pression atmosphérique d'une valeur supérieure ou égale à 10 kPa, et de préférence supérieure ou égale à 20 kPa. Il est également tout à fait envisageable, afin de permettre une cuisson très rapide et efficace, que l'enceinte soit conçue pour que la pression régnant en son sein puisse excéder la pression atmosphérique d'une valeur sensiblement comprise entre 40 et 110 kPa, et de préférence sensiblement comprise entre 50 et 100 kPa.

Le couvercle 3 affecte préférentiellement une forme générale discoïde, complémentaire de la forme de la cuve 2.

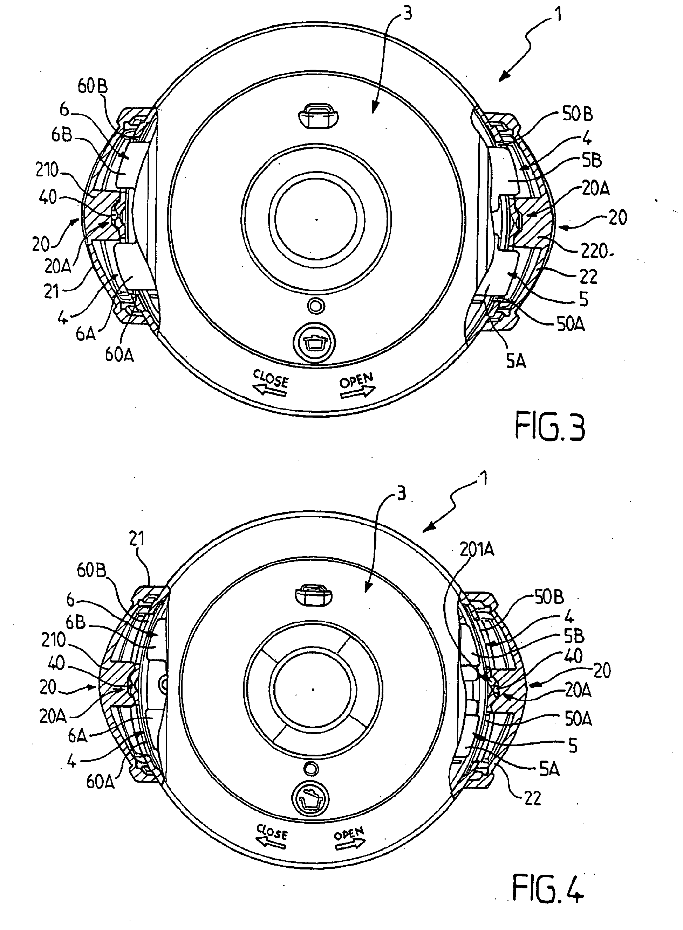

Avantageusement, le couvercle 3 peut être verrouillé ou déverrouillé à volonté sur la cuve 2, le verrouillage du couvercle 3 permettant à l'enceinte de monter en pression sans échappement du couvercle 3 sous l'effet de la pression. A cette fin, l'autocuiseur 1 comprend préférentiellement un moyen de verrouillage / déverrouillage 4 du couvercle 3 sur la cuve 2. Le moyen de verrouillage / déverrouillage 4 peut être de tout type connu de l'homme du métier, et est de façon classique susceptible d'évoluer entre une configuration de verrouillage du couvercle 3 relativement à la cuve 2 (illustrée notamment à la figure 3) dans laquelle le couvercle 3 est solidarisé à la cuve 2, et une configuration de déverrouillage du couvercle 3 relativement à la cuve 2 (illustrée notamment à la figure 4), dans laquelle le couvercle 3 peut être librement séparé de la cuve 2.

De préférence, le moyen de verrouillage / déverrouillage 4 comprend au moins un élément de verrouillage 5, 6 du couvercle 3 relativement à la cuve 2, ledit au moins un élément de verrouillage 5, 6 étant monté mobile, sur le couvercle 2, sensiblement en translation radiale par rapport à l'axe X-X' par l'intermédiaire d'au moins un moyen d'entraînement correspondant entre une position indexée de verrouillage (illustrée par exemple à la figure 3) et une position indexée de déverrouillage (illustrée par exemple à la figure 4).

Selon un mode de réalisation non illustré, ledit au moins un élément de verrouillage 5, 6 peut comprendre une mâchoire destinée à enserrer les bords périphériques de la cuve 2 et du couvercle 3. Ladite mâchoire peut se présenter sous la forme d'une plaque métallique, profilée en U à son extrémité extérieure, tel que cela est bien connu en soi de l'homme du métier.

Selon le mode de réalisation alternatif préféré illustré aux figures, l'autocuiseur 1 conforme à l'invention comprend deux éléments de verrouillage 5, 6 constitués par des segments bifides présentant chacun deux pênes de verrouillage respectifs 5A, 5B, 6A, 6B lesdits segments étant positionnés en vis-à-vis, de manière diamétralement opposée en regard de l'axe de symétrie général X-X' de l'appareil.

Avantageusement, le moyen d'entraînement pour chaque segment bifide consiste en un bras entraîneur respectif, lequel bras entraîneur peut par exemple venir de matière avec le segment correspondant.

Des ouvertures de verrouillage 50A, 50B, 60A, 60B complémentaires aux pênes 5A, 5B, 6A, 6B sont ménagées dans la cuve 2, de telle sorte que le verrouillage du couvercle 3 correspond à l'engagement des pênes 5A, 5B, 6A, 6B dans les ouvertures complémentaires respectives 50A, 50B, 60A, 60B (cf. figure 3), à la manière d'un système de serrure pêne / gâche, pour empêcher sensiblement tout mouvement du couvercle 3 par rapport à la cuve 2, tandis que le déverrouillage du couvercle 3 correspond à la rétractation et au désengagement des pênes 5A, 5B, 6A, 6B hors des lumières 50A, 50B, 60A, 60B correspondantes pour que lesdits pênes ne coopèrent pas avec lesdites lumières 50A, 50B, 60A, 60B.

Le moyen de verrouillage / déverrouillage 4 du couvercle 3 relativement à la cuve 2 n'est cependant pas limité à un système à segments ou à mâchoires et peut par exemple reposer sur d'autres principes, bien connus en tant que tels, du genre moyen de verrouillage / déverrouillage à baïonnettes ou moyen de verrouillage / déverrouillage à étrier.

Conformément à l'invention, l'autocuiseur 1 comprend également au moins un organe de préhension 20 fixé sur la cuve 2, et de préférence fixé directement sur la paroi de la cuve 2. L'organe de préhension 20 est conçu pour permettre à l'utilisateur de manipuler non seulement la cuve 2 seule mais également et surtout l'autocuiseur 1 complet (formé de l'assemblage de la cuve 2 et du couvercle 3), en particulier lorsque ledit autocuiseur 1 est rempli d'aliments cuits ou à cuire, accompagnés éventuellement d'un liquide de cuisson. L'organe de préhension 20 est donc conçu pour permettre une prise manuelle aisée et ferme de l'autocuiseur 1, de manière à ce que l'utilisateur puisse déplacer manuellement et à volonté son autocuiseur 1 sans risque de voir ce dernier lui échapper. De préférence et comme illustré aux figures, l'organe de préhension 20 comprend au moins une poignée 21 s'étendant sensiblement à partir et vers l'extérieur de la cuve 2, radialement par rapport à l'axe X-X'.

L'organe de préhension 20 est fixé sur la cuve 2 à l'aide d'un moyen d'attache 20A permettant d'établir une liaison mécanique, et de préférence une liaison mécanique d'encastrement, entre l'organe de préhension 20 et la cuve 2. De préférence, l'organe de préhension 20 est distinct et indépendant de la cuve 2, et est rapporté et fixé sur cette dernière, à l'aide du moyen d'attache 20A. Le moyen d'attache 20A permet donc d'assujettir, c'est-à-dire de fixer l'organe de préhension 20 directement sur la cuve 2.

Selon l'invention, le moyen d'attache 20A comprend au moins un orifice de fixation 200A traversant la paroi de la cuve 2, c'est-à-dire s'étendant à travers toute l'épaisseur E de ladite paroi de cuve.

L'orifice de fixation 200A est, conformément à l'invention, positionné sur la paroi de la cuve 2 pour ne pas communiquer avec l'intérieur de l'enceinte de cuisson. Cela signifie que si l'orifice de fixation 200A est certes ménagé à travers la paroi de la cuve 2 de façon à entièrement traverser cette dernière, il est localisé à un endroit de la paroi de cuve 2 qui ne contribue pas à former, avec le couvercle 3, l'enceinte de cuisson étanche.

Conformément à l'invention, le moyen d'attache 20A comprend également un élément de fixation 201A, relié à l'organe de préhension 20 et s'étendant à travers l'orifice de fixation 200A, pour assurer la fixation de l'organe de préhension 20 à la paroi de la cuve 2. L'élément de fixation 201A est ainsi enfilé dans l'orifice de fixation 200A, de façon à traverser la paroi de la cuve sur toute l'épaisseur E de cette dernière.

De préférence, l'élément de fixation 201A s'étend, au travers de l'orifice de fixation 200A, entre une extrémité externe 202A assujettie à l'organe de préhension 20 et une extrémité interne 203A pourvue d'une tête venant en appui contre la cuve 2, autour de l'orifice 200A, tel que cela est illustré aux figures.

L'invention repose donc sur un principe de fixation très simple de l'organe de préhension 20 à la paroi de la cuve 2, ce principe de fixation étant basé sur la coopération d'un trou traversant la paroi de cuve de part en part et d'un élément de fixation passant par ledit trou.

Afin d'éviter de prévoir la conception et la construction d'un système spécial permettant de préserver l'étanchéité de l'enceinte de cuisson (ce qui est absolument nécessaire étant donné que l'autocuiseur 1 est par nature destiné à assurer une montée en pression significative de l'enceinte), l'invention prévoit de positionner l'orifice de fixation 200A dans une zone de la paroi de cuve 2 qui ne contribue pas directement à former l'enceinte de cuisson, de sorte que toute problématique d'étanchéité est de ce fait écartée.

Grâce à ce positionnement spécifique de l'orifice de fixation 200A, il n'est donc pas nécessaire de prévoir une pièce supplémentaire de fixation tel qu'un pontet rapporté par soudage sur la face externe de la cuve 2 comme dans l'art antérieur.

En définitive, l'invention permet d'obtenir une fixation de l'organe de préhension 20 à la cuve 2 par la simple mise en oeuvre d'un orifice de fixation pratiqué directement dans et à travers la paroi de la cuve 2 (et non à travers une pièce annexe rapportée sur la cuve), tout en garantissant une étanchéité durable de l'enceinte de cuisson.

Avantageusement, l'orifice de fixation 20A est ménagé à travers la paroi latérale 2B de la cuve 2, ledit orifice 200A s'étendant à travers toute l'épaisseur E de la paroi latérale 2B, entre la face interne 30 de la paroi latérale 2B, située en regard de l'intérieur de la cuve 2, et la face externe 31 de ladite paroi latérale 2B, opposée à la face interne 30 et située vers l'extérieur de l'autocuiseur 1.

De préférence, tel que cela est illustré aux figures, l'autocuiseur 1 comprend deux poignées 21, 22 disposées sur la cuve 2 de manière diamétralement opposées relativement à l'axe de symétrie X-X'. Les deux poignées 21, 22 sont de préférence identiques, et comprennent par exemple chacune une embase 210, 220 fixée directement à la paroi de cuve 2 et à partir de laquelle s'étend une anse 211, 221 qui vient de matière avec l'embase et est destinée à être saisie manuellement par l'utilisateur. Plus précisément, dans l'exemple illustré aux figures, chaque poignée 21, 22 est rapportée directement contre la face externe 31 de la paroi latérale 2B de la cuve 2. Chaque poignée 21, 22 est de préférence fixée à la cuve 2 de la même façon, c'est-à-dire grâce à un moyen d'attache correspondant comprenant un orifice de fixation et un élément de fixation conformes à la description qui précède.

Avantageusement, l'élément de fixation 201A comprend au moins une vis 40 pourvue d'une tête 40A et d'une tige filetée 40B s'étendant à partir de ladite tête 40A à travers l'orifice de fixation 200A. L'organe de préhension 20 est quant à lui avantageusement pourvu d'un trou taraudé 50 dans lequel est vissée la tige filetée 40B, la tête 40A (dont le diamètre est supérieur à celui de la tige 40B) étant positionnée à l'intérieur de la cuve 2 et venant en appui contre cette dernière, c'est-à-dire contre la face interne 30 de la paroi latérale 2B.

De préférence, le trou taraudé 50, qui est par exemple ménagé dans l'embase 220 de la poignée 22, est borgne. En d'autres termes, le trou taraudé 50 ne débouche pas vers l'extérieur de l'appareil, de sorte qu'une fois la poignée 22 assemblée sur la cuve 2, le moyen d'attache 20A est totalement masqué et inaccessible de l'extérieur de l'autocuiseur 1. Cela présente bien entendu un avantage en matière esthétique, puisqu'en particulier, la vis 40 reste invisible, mais également et surtout un avantage en matière de sécurité puisque la vis ne peut pas entrer en contact, à l'extérieur de l'autocuiseur 1, avec la main de l'utilisateur. Au contraire, la tige filetée 40B est entièrement englobée dans la poignée 22, laquelle est réalisée de préférence en un matériau isolant thermiquement, de façon à procurer une isolation thermique complète à l'utilisateur. De préférence chaque poignée 21, 22 se présente sous la forme d'une pièce d'un seul tenant réalisée en un matériau thermodurcissable, obtenue par exemple par moulage, étant entendu que tout autre matériau satisfaisant aux contraintes thermiques peut être envisagé (matériau métallique par exemple).

Le trou taraudé 50 est préférentiellement ménagé directement dans le matériau constituant l'embase 220, par toute technique d'usinage connue. Il est cependant tout à fait envisageable de prévoir, selon une solution alternative, que le trou taraudé 50 soit réalisé dans un insert, par exemple métallique, ledit insert étant lui-même intégré dans l'embase 220 par exemple par vissage ou surmoulage.

Avantageusement, le couvercle 3 est conçu pour accoster la paroi latérale 2B de la cuve 2 selon une zone d'interface 60 sensiblement étanche pour former l'enceinte de cuisson. L'enceinte de cuisson est ainsi délimitée par le fond 2A, le couvercle 3, la zone d'interface 60 et la portion 70 de la paroi latérale s'étendant entre le fond 2A et la zone d'interface 60. L'orifice de fixation 200A est ménagé en dehors de cette portion 70. L'orifice de fixation 200A est par exemple ménagé dans une portion 80 de la paroi latérale s'étendant à partir de la portion 70 contribuant à délimiter l'enceinte, ladite portion 80 s'étendant à partir de la portion 70 jusqu'à l'ouverture supérieure 2C. En d'autres termes l'enceinte de cuisson s'étend, selon la direction verticale définie par l'axe X-X', entre le fond 2A et une ligne d'étanchéité correspondant à la zone d'interface entre le couvercle 3 et la cuve 2, l'orifice de fixation 200A étant ménagé dans la paroi de la cuve 2 en dehors de la zone délimitée entre le fond 2A et la zone d'interface 60. Cela signifie que l'orifice de fixation 200A est ménagé, sur la paroi de cuve 2, à une altitude supérieure à celle de la zone d'interface 60 formant ligne d'étanchéité (par rapport à un référentiel dont l'origine correspond par exemple au fond 2A).

De préférence, le couvercle 3 comprend un bord tombant 3B, s'étendant sensiblement vers le bas à partir d'un corps principal 3A lui-même destiné à se trouver parallèle au fond 2A. Le bord tombant 3B est destiné à être introduit dans la cuve 2, à l'intérieur de cette dernière, pour venir en contact étanche avec la face interne 30 de la paroi latérale 2B.

De préférence, le bord tombant 3B est pourvu d'un joint d'étanchéité 3C par l'intermédiaire duquel est réalisé le contact étanche entre la cuve 2 et le couvercle 3.

De préférence, afin de faciliter l'accostage du couvercle 3 sur la paroi latérale 2B, cette dernière présente un décrochement 2D contre lequel vient en appui le joint 3C. Ainsi, dans l'exemple illustré aux figures, le décrochement 2D est une portion sensiblement tronconique de la paroi latérale 2B qui relie deux autres portions de ladite paroi latérale 2B, ces deux autres portions étant chacune sensiblement verticale mais de diamètres différents. La cuve 2 s'évase ainsi à partir du fond 2A.

## Revendications

1. Autocuiseur domestique (1) comprenant :
- une cuve (2) qui comprend elle-même une paroi,
- un couvercle (3) destiné à être rapporté sur la cuve (2) pour former avec cette dernière une enceinte de cuisson sensiblement étanche,
- au moins un organe de préhension (20), fixé sur la cuve (2) à l'aide d'un moyen d'attache (20A),
**caractérisé en ce que** le moyen d'attache (20A) comprend au moins :
- un orifice de fixation (200A) traversant la paroi de la cuve (2), ledit orifice de fixation (200A) étant positionné sur la paroi de la cuve (2) pour ne pas communiquer avec l'intérieur de l'enceinte de cuisson,
- et un élément de fixation (201A), relié à l'organe de préhension (20) et s'étendant à travers l'orifice de fixation (200A).

2. Autocuiseur (1) selon la revendication 1 **caractérisé en ce que** la paroi de la cuve (2) comprend elle-même un fond (2A) et une paroi latérale (2B) qui s'élève à partir et à la périphérie dudit fond (2A), ledit orifice de fixation (200A) étant ménagé à travers ladite paroi latérale (2B).

3. Autocuiseur (1) selon la revendication 2 **caractérisé en ce que** le couvercle (3) est conçu pour accoster la paroi latérale de la cuve (2) selon une zone d'interface (60) sensiblement étanche pour former l'enceinte de cuisson, ladite enceinte de cuisson étant délimitée par le fond (2A), le couvercle (3), la zone d'interface (60) et la portion (70) de la paroi latérale (2B) s'étendant entre le fond (2A) et la zone d'interface (60), l'orifice de fixation (200A) étant ménagé en dehors de cette portion (70).

4. Autocuiseur (1) selon l'une des revendications 2 ou 3 **caractérisé en ce que** la paroi latérale (2B) présente une face interne (30) située en regard de l'intérieur de la cuve (2) et une face externe (31) opposée, le couvercle (3) comprenant un bord tombant (3B) destiné à être introduit dans la cuve (2) pour venir en contact étanche avec ladite face interne (30) de la paroi latérale (2B).

5. Autocuiseur (1) selon la revendication 4 **caractérisé en ce que** ledit bord tombant (3B) est pourvu d'un joint d'étanchéité (3C) par l'intermédiaire duquel est réalisé le contact étanche entre la cuve (2) et le couvercle (3).

6. Autocuiseur (1) selon l'une des revendications 1 à 5 **caractérisé en ce que** l'organe de préhension (20) comprend au moins une poignée (21) s'étendant sensiblement à partir et vers l'extérieur de la cuve (2).

7. Autocuiseur (1) selon l'une des revendications 1 à 6 **caractérisé en ce que** i'élément de fixation (201A) s'étend, à travers l'orifice de fixation (200A), entre une extrémité externe (202A) assujettie à l'organe de préhension (20) et une extrémité interne (203A) pourvue d'une tête venant en appui contre la cuve (2).

8. Autocuiseur (1) selon l'une des revendications 1 à 7 **caractérisé en ce que** l'élément de fixation (201A) comprend au moins une vis (40) pourvue d'une tête (40A) et d'une tige filetée (40B) s'étendant à partir de ladite tête (40A) à travers l'orifice de fixation (200A), l'organe de préhension (20) étant pourvu d'un trou taraudé (50) dans lequel est vissée la tige filetée (40B), la tête (40A) étant positionnée à l'intérieur de la cuve (2) et venant en appui contre cette dernière.

9. Autocuiseur (1) selon la revendication 8 **caractérisé en ce que** ledit trou taraudé (50) est borgne.

10. Autocuiseur (1) selon l'une des revendications 1 à 9 **caractérisé en ce que** l'organe de préhension (20) est directement fixé à la paroi de la cuve (2).

## Claims

1. Domestic pressure cooker (1) comprising:
- a pan (2) which itself comprises a wall,
- a lid (3) designed to be attached to the pan (2) to form with the latter a cooking chamber that is substantially impervious,
- at least one gripping part (20), attached to the pan (2) by means of attachment means (20A),
**characterised in that** the attachment means (20A) at least comprise:
- an attachment orifice (200A) passing through the wall of the pan (2), wherein said attachment orifice (200A) is positioned on the wall of the pan (2) so that it does not communicate with the inside of the cooking chamber,
- and an attachment part (201A), connected to the gripping part (20) and extending through the attachment orifice (200 A).

2. Pressure cooker (1) according to claim 1 **characterised in that** the wall of the pan (2) itself comprises a base (2A) and a lateral wall (2B) which rises from and at the periphery of said base (2A), wherein said attachment orifice (200A) is positioned through said lateral wall (2B).

3. Pressure cooker (1) according to claim 2 **characterised in that** the lid (3) is designed to come into contact with the lateral wall of the pan (2) according to a substantially impervious interface zone (60) to form the cooking chamber, wherein said cooking chamber is defined by the base (2A), the lid (3), the interface zone (60) and the portion (70) of the lateral wall (2B) extending between the base (2A) and the interface zone (60), wherein the attachment orifice (200A) is located outside of this portion (70).

4. Pressure cooker (1) according to any of claims 2 or 3, **characterised in that** the lateral wall (2B) has an inside face (30) located opposite the inside of the pan (2) and an outside face (31) opposite, wherein the lid (3) has a descending edge (3B) designed to be introduced into the pan (2) to come into impervious contact with said inside face (30) of the lateral wall (2B).

5. Pressure cooker (1) according to claim 4 **characterised in that** said descending edge (3B) is equipped with a seal (3C) via which the impervious contact between the pan (2) and the lid (3) is made.

6. Pressure cooker (1) according to any of claims 1 to 5 **characterised in that** the gripping part (20) at least comprises a handle (21) substantially extending from and towards the outside of the pan (2).

7. Pressure cooker (1) according to any of claims 1 to 6, **characterised in that** the attachment part (201A) extends, through the attachment orifice (200A), between an outside end (202A) subject to the gripping part (20) and an inside end (203A) fitted with a head which comes into contact with the pan (2).

8. Pressure cooker (1) according to any of claims 1 to 7 **characterised in that** the attachment part (201A) at least comprises a screw (40) equipped with a head (40A) and a threaded rod (40B) extending from said head (40A) through the attachment orifice (200A), wherein the gripping part (20) is fitted with a tapped hole (50) into which the threaded rod (40B) is screwed, wherein the head (40A) is positioned inside the pan (2) and comes into contact with the latter.

9. Pressure cooker (1) according to claim 8 **characterised in that** said tapped hole (50) is blind.

10. Pressure cooker (1) according to any of claims 1 to 9 **characterised in that** the gripping part (20) is directly attached to the wall of the pan (2).

## Patentansprüche

1. Häuslicher Schnellkopftopf (1), aufweisend:
- einen Topf (2), der eine Wand aufweist;
- einen Deckel (3), der auf den Topf (2) aufzusetzen ist, um mit diesem einen im Wesentlichen dichten Kochraum zu bilden,
- mindestens ein Greifelement (20), das mit Hilfe einer Befestigungseinrichtung (20A) an dem Topf (2) befestigt ist, **dadurch gekennzeichnet, dass** die Befestigungseinrichtung (20A) mindestens aufweist:
- eine durch die Wand des Topfs (2) hindurchgehende Befestigungsöffnung (200A), wobei die Befestigungsöffnung (200A) so an der Wand des Topfs (2) angeordnet ist, um nicht mit dem Inneren des Kochraums in Verbindung zu stehen,
- und ein Befestigungselement (201A), das mit dem Greifelement (20) verbunden ist und sich durch die Befestigungsöffnung (200A) erstreckt.

2. Schnellkopftopf (1) nach Anspruch 1, **dadurch gekennzeichnet, dass** die Wand des Topfs (2) selbst einen Boden (2A) und eine Seitenwand (2B) aufweist, die sich von dem Umfang des Bodens (2A) aus aufwärts erstreckt, wobei sich die Befestigungsöffnung (200A) durch die Seitenwand (2B) hindurch erstreckt.

3. Schnellkopftopf (1) nach Anspruch 2, **dadurch gekennzeichnet, dass** der Deckel (3) konzipiert ist, um an der Seitenwand des Topfs (2) längs einer im Wesentlichen dichten Grenzflächenzone (60) anzuliegen, um den Kochraum zu bilden, wobei der Kochraum von dem Boden (2A), dem Deckel (3), der Grenzflächenzone (60) und dem Teil (70) der Seitenwand (2B) begrenzt wird, der sich zwischen dem Boden (2A) und der Grenzflächenzone (60) erstreckt, wobei die Befestigungsöffnung (200A) außerhalb dieses Abschnitts (70) angeordnet ist.

4. Schnellkopftopf (1) nach einem der Ansprüche 2 oder 3, **dadurch gekennzeichnet, dass** die Seitenwand (2B) eine zum Inneren des Topfs (2) hin gelegene Innenfläche (30) und eine gegenüberliegende Außenfläche (31) aufweist, wobei der Deckel (3) einen herabhängenden Rand (3B) aufweist, der in den Topf (2) einzuführen ist, um in dichten Kontakt mit der Innenfläche (30) der Seitenwand (2B) zu kommen.

5. Schnellkopftopf (1) nach Anspruch 4, **dadurch gekennzeichnet, dass** der herabhängende Rand (3B) mit einer Dichtung (3C) versehen ist, mittels welcher der dichte Kontakt zwischen dem Topf (2) und dem Deckel (3) hergestellt ist.

6. Schnellkopftopf (1) nach einem der Ansprüche 1 bis 5, **dadurch gekennzeichnet, dass** das Greifelement (20) mindestens einen Griff (21) aufweist, der sich im Wesentlichen ausgehend von und zu der Außenseite des Topfs (2) hin erstreckt.

7. Schnellkopftopf (1) nach einem der Ansprüche 1 bis 6, **dadurch gekennzeichnet, dass** sich das Befestigungselement (201A) durch die Befestigungsöffnung (200A) hindurch zwischen einem an dem Greifelement (20) angebrachten äußeren Ende (202A) und einem inneren Ende (203A) erstreckt, das mit einem Kopf versehen ist, der an dem Topf (2) zur Anlage kommt.

8. Schnellkopftopf (1) nach einem der Ansprüche 1 bis 7, **dadurch gekennzeichnet, dass** das Befestigungselement (201A) mindestens eine Schraube (40) aufweist, die mit einem Kopf (40A) und einem Gewindeschaft (40B) versehen ist, der sich von dem Kopf (40A) aus durch die Befestigungsöffnung (200A) hindurch erstreckt, wobei das Greifelement (20) mit einer Gewindebohrung (50) versehen ist, in welche der Gewindeschaft (40b) eingeschraubt ist, wobei der Kopf (40A) im Inneren des Topfs (2) positioniert ist und an diesem zur Anlage kommt.

9. Schnellkopftopf (1) nach Anspruch 8, **dadurch gekennzeichnet, dass** die Gewindebohrung (50) blind ist.

10. Schnellkopftopf (1) nach einem der Ansprüche 1 bis 9, **dadurch gekennzeichnet, dass** das Greifelement (20) direkt an der Wand des Topfs (2) befestigt ist.
